# EUROPEAN PATENT APPLICATION

(11) **EP 1 914 876 A2**
(43) Date of publication of application: **23.04.2008**
(21) Application number: 07018671.3
(22) Date of filing: 22.09.2007
(51) Int. Cl.: H02P 6/08

(54) **Controller for regulating the speed and direction od a conveyor driven by a motorized roller**

(30) Priority: 19.10.2006 JP 2006285123
(71) Applicant: Itoh Denki Co., Ltd., Kasai-shi, Hyogo 675-2302 (JP)
(72) Inventor: Itoh, Kazuo, Kasai-shi Hyogo 675-2302 (JP); Nagai, Yoshinori, Kakogawa-shi Hyogo 675-0066 (JP)
(74) Representative: Paul, Dieter-Alfred

(57) **Abstract**

A controller and method are provided for controlling a conveyor transporting things and persons. The conveyor is controlled into a desired speed and/or direction by transmitting a plurality of control signals to the driving motor through a common signal line, wherein the control signals are numerically expressed in terms of physical quantities, wherein the physical quantities include value, quantity, and range.

## Description

### TECHNICAL FIELD

The present invention relates to a controller adapted for incorporation in a conveyor transporting objects such as things or persons, the controller regulating the speed and direction of the conveyor.

### BACKGROUND ART

There is a known conveyor which transports objects, such as things or persons, under the drive of a motorized roller (hereinafter, called "roller"). The speed and direction of the conveyor are previously determined, and the predetermined speed and direction are maintained by means of a controller. The controller transmits control signals to the driving motor through signal lines in response to the conditions of transportation so as to keep the speed and direction as predetermined. The control method with the use of a controller is disclosed in Japanese Laid-open Specifications No. 2004-307214.

The known conveyor is provided with a cable through which a control signal is transmitted from the controller to the driving motor, wherein the cable contains several signal lines, bundled or not. The more signal lines contained in the cable, the greater the diameter of the cable becomes. The cable contains a source line, a GND line, a stop signal line, a rotary direction signal, a speed varying signal, an error output line and others, totally six or seven kinds of signal lines. The cable having an increased diameter tends to restrict the layout of the conveyor. In addition, when more signal lines are used, the conveyor must have more terminals. The lines must be connected one by one to the water-proof screw-type connectors, but because of the increase in the number of lines the connecting work is complicated and time-consuming.

Therefore, it is desired to reduce the number of signal lines to be contained in a cable, so as to save labor in connecting them to each terminal, and minimize the diameter of the cable. However, at least four signal lines cannot be omitted; that is, a source line, a GND line, a stop line, and a rotary direction signal line. But these four kinds of signal lines are not sufficient to regulate the rotary speed of transportation unless other necessary signal lines are used, thereby limiting the fields of applicability.

The present invention is directed to reduce the number of signal lines by sharing a common line or lines among multiple signals without sacrificing the function of controlling the driving motor.

### SUMMARY OF THE INVENTION

A first version of the controller embodying the present invention includes a serial communication path through which a plurality of control signals are transmitted to the driving motor.

The first version eliminates the necessity of providing a plurality of signal lines but at least one common line can transmit a plurality of signals one by one to the driving motor, thereby reducing the diameter of a cable with a smaller number of signal lines. Thus, the individual signal lines can be easily and readily connected to the terminals.

A second version of the controller includes a common signal line through which a variety of control signals are selectively transmitted in series to the driving motor.

The second version transmits different kinds of signals in series to the driving motor through the common signal line, thereby reducing the number of signal lines, and the diameter of a cable containing a bundle of signal lines. In addition, the reduced number of signal lines makes it easy to connect the individual lines to the respective terminals.

A third version of the controller is a modification to the first version or the second version wherein the control signals are numerically expressed in terms of physical quantities, wherein the physical quantities include value, quantity, and range.

According to the third version, the numerically expressed control signals make it accessible to regulate the speed and directions of the conveyor as desired.

A fourth version of the embodiment is a modification to the first version or the second version, wherein the signals includes at least four kinds of signals instructing the driving motor to start, to stop, to change its rotating speed of the driving motor, and to change its direction of the driving motor, respectively.

According to the fourth version the most basic modes of the conveyor are effected through a common signal line.

A fifth version of the embodiment is a modification to the first version or the second version, wherein the physical quantity is voltage or frequency.

The fifth version ensures that the factors such as to start and stop, to change the speed, to change the direction and switching of direction of the driving motor are determined independently of other factors merely by adjusting voltage or frequency.

### BRIEF DESCRIPTION OF THE DRAWINGS

Fig. 1 is a flowchart showing the flow of control signals for controlling the rotation of a motorized roller of the conveyor;
Fig. 2 is a wiring diagram showing the connection between the controller division and the distribution board, wherein three signal lines are shown for illustration purpose only;
Fig. 3 is a graph showing the manner of regulating the start, stop, speed, direction and directional switching of the roller by selecting physical quantities previously allotted to desired factors; and
Fig. 4 is a cross-sectional view through the motorized roller to which the controller division of the invention is applied.

### DESCRIPTION OF THE PREFERED EMBODIMENTS

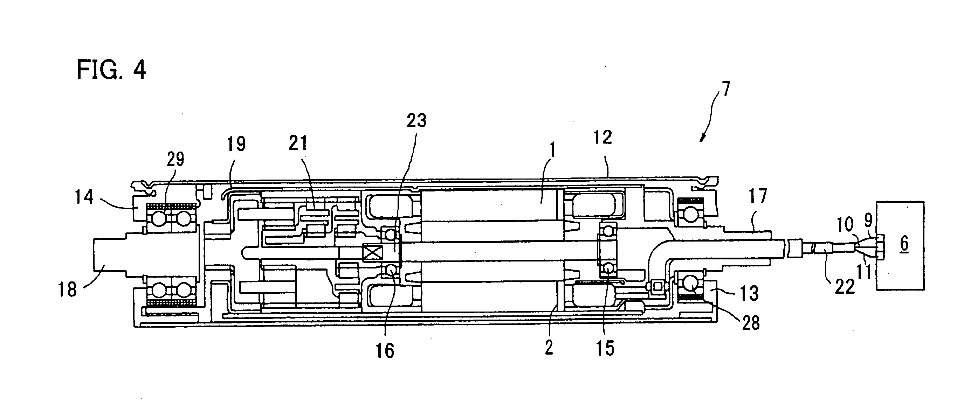

Referring to Fig. 4, a motorized roller 7 will be more particularly described, prior to the detailed description of the present invention:

There is provided a roller 7 which houses a motor 1; in other words, the roller 7 has a commonly called built-in motor 1. More particularly, the roller 7 has a casing 12 in which the driving motor 1 is provided with a distribution board 2 and a speed reduction gear 21. The casing 12 is preferably made of metal, and is closed by plugs 13 and 14. The plugs 13 and 14 have shafts 17 and 18 passed through, respectively. The shafts 17 and 18 rotatively carry the casing 12 through bearings 28 and 29.

The shaft 17 projects on either side of the plug 13, and the inner projecting portion of the shaft 17 has an increased diameter, around whose periphery a cylindrical sleeve 19 is integrally fixed. The cylindrical sleeve 19 has such an outside diameter slightly short of the inside diameter of the casing 12, to the extent that it is out of contact with the inside wall surface of the casing 12. The cylindrical sleeve 19 is substantially equal to a length obtained by reducing the full length of the casing 12 from the sum of the lengths of the plugs 13 and 14. As shown in Fig. 4, the cylindrical sleeve 19 houses the driving motor 1 and the speed reduction gears 21 as a unit, and the shaft 18 is a bar-shaped member and rotatively supports the plug 14; that is, the casing 12.

The rotary shaft 23 is aligned with the cylindrical sleeve 19, and its one end (to the right in Fig. 4) is rotatively carried on the shaft 17 through a bearing 15. The opposite end (to the left in Fig. 4) is connected to the speed reduction gears 21 whereby the rotating speed of the rotary shaft 23 is reduced and then transmitted to the roller 12.

The stationary shaft 17 is hollow so as to allow a cable 8 containing a bundle of signal lines 9 to 11, which connect the driving motor 1 to a controller division 6 located outside the roller 7.

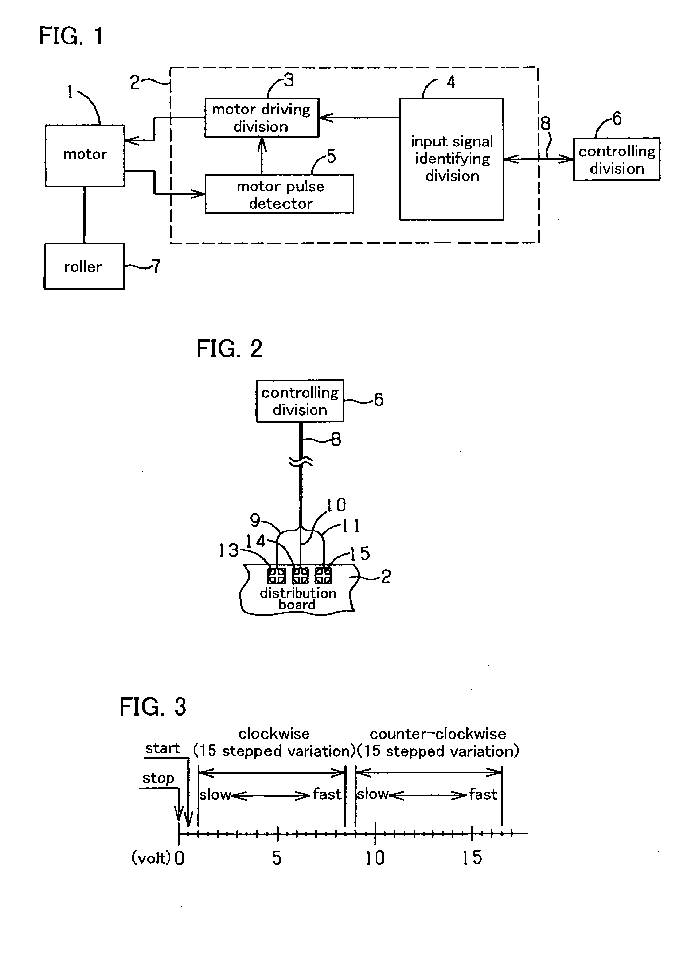

The roller 7 is connected to a conveyor (not shown), and objects such as things or persons are transported according to the rotation of the roller 7. The control of the rotation of the roller 7 will be more particularly described by referring to Fig. 1:

The roller 7 is driven by the driving motor 1. The roller 7 is rotated in a clockwise or counter-clockwise direction, as desired. In Fig. 1 the distribution board 2 is depicted outside the driving motor 1 but actually the board 2 is accommodated in the driving motor 1. The controller division 6 regulates the speed and direction (clockwise or counter-clockwise) of the roller 7 by adjusting the speed and direction of the driving motor 1.

The distribution board 2 has a circuitry exclusively used for driving the driving motor 1. The board 2 has a motor driving division 3, an input signal identifying division 4, and a motor pulse detector 5. The motor driving division 3 is constituted preferably by a power transistor to which a signal detected by the pulse detector 5 is input, and a control signal is also input from the input signal identifying division 4.

The motor pulse detector 5 detects the rotations per minute (RPM) of the driving motor 1 in terms of motor pulses, and the motor driving division 3 drives the motor 1 such that the difference between the predetermined number of rotations and the number of the actual rotations becomes zero.

The input signal identifying division 4 is in serial communication with the controller division 6, and is provided with an interface for receiving a control signal, from which the control signal is delivered in series to the input signal identifying division 4, which will be more particularly described below.

The input signal identifying division 4 on the distribution board 2 receives a control signal through a signal line in the cable 8 from the controller division 6, preferably a programmable logic controller. As shown In Fig. 2, the illustrated circuit indicates that the distribution board 2 is connected to the controller division 6 through the cable 8, having three signal lines 13, 14 and 15.

The cable 8 contains a bundle of signal lines 9, 10 and 11. The line 9 transmits a start signal to the driving motor 1, and the line 10 transmits a stop signal to the driving motor 1. The line 11 transmits a signal for regulating the speed and direction (clockwise or counter-clockwise) of the roller 7. In other words, the line 9 is a source line, the line 10 is a GND line, and the line 11 is a control line. These lines 9, 10 and 11 are connected to the distribution board 2 through the respective terminals 13, 14 and 15.

There can be various factors involved in the transportation of objects. These factors are previously edited into signals (data), such as transmitted bits, parity bits, start bits, stop bits, and a data format and arranged to correspond to the rotating direction, speed, and a possible error. The controller division 6 and the distribution board 2 are in mutual serial communication.

In Fig. 2, the control line 11 contained in the cable 2 is used when the driving motor 1 is started or stopped, and its speed and direction are changeable. The procedure will be described more in detail by referring to Fig. 3:

The situation depicted in Fig. 3 is for illustration purpose only, where a single line 11 is used to operate the start and stop of the driving motor 1, and the speed and direction thereof by selecting physical quantities expressed in terms of numbers from 0 (zero) up as advances 0.5 by 0.5. When the conveyor (not shown) is put into operation, the driving motor 1 is started to drive the roller 7. When the conveyor is stopped, the driving motor 1 is stopped, which means that the roller 7 is stopped. The circumstances may require that the conveyor speeds up or slows down, or changes from a clockwise direction to a counter-clockwise direction and vice versa. As shown in Fig. 3, these factors are numerically represented in the range of 0 (zero) to 16.5.

For example, it is previously determined that the physical quantity 0.5 represents "motor starts". In order to use this quantity as a control signal, this number is input to the input signal identifying division 4 on the distribution board 2. Likewise, the physical quantity 0 (zero) is determined to represent "motor stops", and input to the same division 4.

The controller division 6 can also transmit a signal so as to ensure that as the physical quantity rises up in the range of 1.0 to 8.5, the roller 7 rotates at a lower to higher speed at fifteen steps in a clockwise direction.

The physical quantity proceeds to the range of 9.0 to 16.5, where the direction is reversed into a counter-clockwise direction. Likewise, as the quantity rises up from 9 to 16.5, the speed goes up 0.5 by 0.5 totally at fifteen steps. In this situation, if the quantity is changed from 10.0 to 15.5, the change is transmitted as a control signal to the distribution board 2 from the controller division 6 through the line 11. As a result, the rotating direction of the driving motor 1 is changed into a counter-clockwise direction and at a higher speed than before.

In Fig. 3, if volt is selected as the physical quantity, 0.5 volt is set for starting the driving motor 1, and a control signal corresponding to 0.5 volt is transmitted from the controlling division 6 to the input signal identifying division 4.

The voltage used as the physical quantity is different from the voltage used to drive the motor 1. The former voltage is generated in a circuitry (not shown) specially fabricated for regulating the controlling division 6 (PLC) and the driving motor 1. This special circuitry is configured so as to ensure that an output voltage is changeable at a pitch of 0.5 volts from 0 (zero) to 16.5 volts.

Instead of voltage, the frequency of an oscillating factor known to be controllable can be adopted. In this case, one way is that a selected range of frequencies is arranged so as to correspond to the start, stop and directional change of the driving motor 1. As a result, if the frequency is set to fall within the range of the frequencies for "start", the driving motor 1 will start so long as the frequency stays within the range. Another way is that a plurality of duty ratios is predetermined, and they are arranged to correspond to the desired modes of the driving motor 1, such as start, stop and directional change.

The physical quantities or values are not limited to voltage and frequency. The controller division 6 is constructed so as to ensure that it can transmit a driving signal for starting the driving motor 1 represented in terms of a particular physical quantity to the input signal identifying division 4. The controller division 6 is provided with a signal line 11 through which the signal is transmitted. In this way, the driving motor 1 (the roller 7) behaves as predetermined, and the objects on the conveyor are properly conveyed as desired.

It is desirable to reduce the number of signal lines to be contained in the cable 8 as few as possible, and as described above, three lines will be preferable. However, the present invention is not limited to the three lines, but one or more necessary signal lines can be added. For example, if a need arises for automatically changing the direction of the conveyor from clockwise to counter-clockwise or vice versa, one more line is exclusively used to switch the direction of the driving motor 1 (the conveyor), thereby avoiding burdening the line 11 with the task of changing the direction of the conveyor. If the physical quantity set for the line 11 inadvertently deflects, the speed of the driving motor 1 will be changed keeping the same rotating direction. Thus, dangerous sudden change in the rotating direction will be prevented. A possible accident due to the sudden directional change of the conveyor will be avoided. More particularly, in Fig. 3 the signal line 11 is exclusively used in the range of 1.0 to 8.5 for changing the speed of rotation, and not used in the range of 9.0 up. The change of direction is exclusively conducted by the additional signal line through which an instruction for the directional change is sent to the input signal identifying division 4

In this way the additional signal line transmits a control signal to the input signal identifying division 4, thereby instructing the driving motor 1 to change its direction clockwise or counter-clockwise, as the case may be. The control signal is generated by an on/off switch signal.

The present invention ensures that the signal line between the motorized roller and the controller division is shared, thereby reducing the diameter of the cable 8 without reducing the number of control signals. Thus, the driving motor 1 is kept free from any restraint.

In the foregoing description the conveyor is a roller conveyor but the present invention can be applied to a belt conveyor using a motorized roller.

## Claims

1. A controller adapted for incorporation in a conveyor, the controller comprising a serial communication path through which a plurality of control signals are transmitted to the motor through a common signal line, thereby regulating the speed and direction of the conveyor, wherein the control signals are numerically expressed in terms of physical quantities represented in value, quantity, and range.

2. A controller adapted for incorporation in a conveyor, the controller comprising a common signal line through which a variety of control signals are transmitted in series to the motor, thereby regulating the speed and direction of the conveyor, wherein the control signals are numerically expressed in terms of physical quantities represented in value, quantity, and range.

3. The controller according to claim 1 or 2, wherein the control signals comprise at least four kinds of signals instructing the motor to start, to stop, to change its rotating speed, and to change its direction, respectively.

4. The controller according to claim 1 or 2, wherein the physical quantity is voltage.

5. The controller according to claim 1 or 2, wherein the physical quantity is frequency.

6. A method for controlling a conveyor transporting things and persons comprising transmitting a plurality of control signals through a common signal line as a serial communication path, thereby regulating the speed and direction of the conveyor, wherein the control signals are numerically expressed in terms of physical quantities represented in value, quantity, and range.

7. A method for controlling a conveyor transporting things and persons comprising transmitting a plurality of control signals through a common signal line in series, thereby regulating the speed and direction of the conveyor, wherein the control signals are numerically expressed in terms of physical quantities represented in value, quantity, and range.

8. The method according to claim 6 or 7, wherein the control signals comprise at least four kinds of signals instructing the motor to start, to stop, to change its rotating speed of the motor, and to change its direction of the motor, respectively.

9. The method according to claim 6 or 7, wherein the physical quantity is voltage.

10. The method according to claim 6 or 7, wherein the physical quantity is frequency.
